# EUROPÄISCHE PATENTSCHRIFT

(11) **EP 4 080 027 B1**
(45) Veröffentlichungstag und Bekanntmachung des Hinweises auf die Patenterteilung: **28.02.2024**
(21) Anmeldenummer: 22168541.5
(22) Anmeldetag: 14.04.2022
(51) Int. Cl.: F01N 11/00, F01N 9/00, F01N 3/10

(54) **VERFAHREN ZUR DURCHFÜHRUNG EINER ON-BOARD-DIAGNOSE EINES ABGASKATALYSATORS**
METHOD FOR PERFORMING AN ON-BOARD DIAGNOSIS OF AN EXHAUST GAS CATALYSER
PROCÉDÉ DE MISE EN UVRE D'UN DIAGNOSTIC EMBARQUÉ D'UN CATALYSEUR DE GAZ D'ÉCHAPPEMENT

(30) Priorität: 20.04.2021 DE 102021203935
(43) Veröffentlichungstag der Anmeldung: 26.10.2022
(73) Patentinhaber: VOLKSWAGEN AKTIENGESELLSCHAFT, 38440 Wolfsburg (DE)
(72) Erfinder: Dorer, Frank, 38518 Gifhorn (DE); Lamminger, Lea Maria, 38102 Braunschweig (DE); Wittig, Frank-Michael, 38112 Braunschweig (DE); Deegen, Boris, 38118 Braunschweig (DE); Paukner, Stefan, 38442 Wolfsburg (DE); Baron von Ceumern-Lindenstjerna, Falk-Christian, 38124 Braunschweig (DE)
(74) Vertreter: Bungartz, Florian

(56) Entgegenhaltungen:
- WO-A1-2019/034606
- DE-A1- 19 931 321
- DE-A1-102012 025 002
- DE-A1-102018 119 447

## Beschreibung

Die Erfindung betrifft ein Verfahren zur Durchführung einer On-Board-Diagnose eines Abgaskatalysators in einem Abgasnachbehandlungssystem einer Verbrennungskraftmaschine eines Fahrzeugs. Die Erfindung betrifft ferner ein zur Durchführung der On-Board-Diagnose des Abgaskatalysators eingerichtetes Fahrzeug.

Die aktuelle und zukünftig immer schärfer werdende Abgasgesetzgebung stellt hohe Anforderungen an die motorischen Rohemissionen und erfordern eine hocheffiziente Abgasnachbehandlung (ANB) von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Ein gemeinsames Merkmal stellt also ein Abgaskatalysator dar, der eine katalytische Beschichtung umfasst, mit deren Hilfe die Schadstoffemissionen (HC, CO und NOx) reduziert werden.

Abgaskatalysatoren besitzen die Eigenschaft, die Geschwindigkeit bestimmter Reaktionen zu erhöhen, ohne dabei selbst verbraucht zu werden. Durch geeignete Wahl der Katalysatormaterialien bzw. -beschichtungen kann erreicht werden, dass bei Anwesenheit von Sauerstoff Oxidationsreaktionen für CO und HC bei relativ niedrigen Temperaturen ablaufen und bei Anwesenheit von reduzierenden Komponenten (CO, H₂, HC) im Abgas die Reduktionsreaktionen von Stickoxiden NOx ablaufen.

Hierfür haben sich unter anderem als Katalysatormaterialien Pt, Pd und Rh erwiesen. Zur Realisierung einer hohen Umsatzrate werden die Edelmetalle auf einem Trägeroxid mit großer Oberfläche dispergiert. Diese Trägeroxide sind üblicherweise anorganische Materialien (z. B. Al₂O₃) mit komplexer Porenstruktur, die als wässrige Lösung (Washcoat) auf wabenförmige Monolithe aus Keramik oder Metall (Substrate) aufgebracht werden.

Abgaskatalysatoren werden zunächst durch das Motorabgas erwärmt. Der Abgaskatalysator benötigt zur Umsetzung der Schadstoffkomponenten (HC, CO, NOx) eine Mindesttemperatur, die als Light-Off-Temperatur bezeichnet wird. Häufig werden Maßnahmen ergriffen, um die Phase bis zum Anspringen des Katalysators (Light Off) zu verkürzen. Die Verkürzung der Aufheizzeit kann durch Optimierung der motorseitigen Katalysatorheizmaßnahmen wie Spätzündung, erhöhte Motordrehzahl, Nockenwellenverstellung, Lambdaverlauf und gegebenenfalls durch Sekundärluftzufuhr erreicht werden. Darüber hinaus gibt es aktive Katalysatorheizmaßnahmen, wozu der so genannte E-Kat (elektrisch heizbarer Katalysator) gezählt wird. Dieser kann die Anspringzeit deutlich verkürzen.

Die genaue Bestimmung des Beginns der erstmalig einsetzenden Konvertierung der Schadstoffemissionen, mit anderen Worten die Bestimmung des Light-Offs, eines Abgaskatalysators während seiner Aufheizphase, kann aktuell nicht eindeutig ermittelt werden. Es erfolgt lediglich eine indirekte Bestimmung mit Hilfe der Sauerstoffspeicherkapazität (oxygen storage capacity, OSC) eines Abgaskatalysators unter Zuhilfenahme der Lambda-Sonden. Diese ist jedoch zum einen langsam und zum anderen ungenau. Eine exakte Bestimmung gewährt jedoch die Vorteile, eine Beurteilung hinsichtlich des Zustands des Abgaskatalysators (beispielsweise Alterung oder Vergiftung) durchzuführen sowie eine verbesserte bedarfsgerechte Steuerung und Regelung der Maßnahmen zur Verkürzung der Aufheizzeit des Abgaskatalysators umzusetzen.

DE 10 2017 214 444 A1 betrifft ein Verfahren zum Betreiben einer Abgasnachbehandlungsanlage, die unter anderem einen Dreiwegekatalysator sowie einen stromabwärts angeordneten NOx-Sensor umfasst. Während des Betriebs erfolgt die kontinuierliche Messung der NOx-Emissionen durch den Sensor. Steigen die NOx-Emissionen, da der Dreiwegekatalysator aufgrund niedriger Katalysatortemperatur seine Effizienz verliert, werden andere Maßnahmen, beispielsweise eine Zündverzögerung und/oder elektrische Aufheizung des Katalysators durchgeführt.

DE 10 2019 006 426 A1 umfasst einen stromabwärts eine Katalysators angeordneten NOx-Sensor zur Überwachung der NOx-Reduktionsfähigkeit eines Katalysators. Während eines mageren Betriebs bei Abgastemperaturen von 600°C oder höher wird zu einem Zeitpunkt, zu dem ein stromabwärts des Katalysators vorliegendes Luft-Kraftstoff-Verhältnis einen Schwellenwert erreicht, der Motor in einen fetten Betriebszustand überführt. Wenn in dem fetten Betriebszustand das stromabwärts vorliegende Luft-Kraftstoff-Verhältnis einen Schwellenwert erreicht, wird der Motor wieder in einen mageren Betriebszustand überführt. Ein Diagnoseelement vergleicht die NOx-Konzentration im fetten Betriebszustand mit einem Diagnoseschwellenwert, um so einen Verschlechterungsgrad der NOx-Reduktionsfähigkeit des Katalysators zu diagnostizieren.

DE 10 2017 218 327 A1 beschreibt ein Verfahren zum Betreiben einer Brennkraftmaschine. Im Abgasstrang der Brennkraftmaschine befindet sich ein Dreiwegekatalysator mit Lambdaregelung, dem ein NOx-Sensor mit integrierter Lambdasonde nachgeordnet ist. Durch kombinierte Messung des Lambdawerts und NH₃-Werts durch den NOx-Sensor mit integrierter Lambdasonde wird ein Lambdasollwert stromauf des Dreiwegekatalysators bestimmt.

Die DE 199 31 321 A1 offenbart ein Verfahren zur Überprüfung der Konvertierungseigenschaften eine Dreiwegekatalysators, bei dem beim Erreichen eines definierten Grenzwerts, der nahe der maximalen Konvertierungsfähigkeit des Katalysators liegt, eine ermittelte Menge von Stickoxiden mit einem Schwellenwert verglichen wird, der einer entsprechenden Menge bei einem neuen Katalysator entsprechen würde, und basierend auf der Abweichung von diesem Schwellenwert auf eine Alterung des Katalysators geschlossen wird. Bei einer solchen Überschreitung des Schwellenwerts kann eine Fehleranzeige aktiviert und/oder ein Fehlereintrag in einem Fehlerspeicher erfolgen.

Die DE 10 2018 119 447 A1 beschreibt ein Verfahren, bei dem über einen definierten Zeitraum der NOx-Gehalt in dem Abgas einer Brennkraftmaschine stromab eines Oxidationskatalysators mittels eines NOx-Sensors und zusätzlich die Temperatur des Oxidationskatalysators ermittelt und diese Werte miteinander korreliert werden.

Die DE 10 2012 025 002 A1 offenbart ein Verfahren zur Diagnose eines Abgaskatalysators, insbesondere eines SCR-Katalysators einer Brennkraftmaschine, die zudem eine Niederdruckabgasrückführung umfasst, indem ein stromauf des Abgaskatalysators gemessener Wert eines Abgasparameters, insbesondere der NOx-Gehalt, mit einem modellierten Rohwert des Abgasparameters verglichen wird. Dabei wird ausgenutzt, dass über die Niederdruckabgasrückführung die Wirksamkeit des Abgaskatalysators auch in dem Abgas stromauf des Abgaskatalysators Auswirkungen hat.

Die WO 2009/034606 A1 beschreibt ein Verfahren zur Überprüfung der Funktionsfähigkeit eines Vor-Katalysators, der in dem Abgasstrang einer Brennkraftmaschine in einer Bypassleitung zu einer Abgasturbine angeordnet ist, mittels eines NOx-Sensors, der stromab des Vor-Katalysators und stromauf oder stromab eines Hauptkatalysators angeordnet ist. Liegt ein gemessener Wert für die Stickoxide oberhalb eines Schwellenwerts, wird von einem Fehler des Vor-Katalysators ausgegangen; ansonsten wird dieser als funktionsfähig beurteilt.

Der Erfindung liegt nun die Aufgabe zugrunde, ein Verfahren und ein entsprechendes Fahrzeug zur Durchführung einer On-Board-Diagnose eines Abgaskatalysators in einem Abgasnachbehandlungssystem einer Verbrennungskraftmaschine eines Fahrzeugs bereitzustellen, durch das das Feststellen eines Zustands des Abgaskatalysators ermöglicht wird.

Diese Aufgabe wird durch ein Verfahren und ein Fahrzeug mit den Merkmalen der unabhängigen Ansprüche gelöst.

Vorteilhafte Ausgestaltungen der Erfindung sind in den Unteransprüchen gekennzeichnet.

Erfindungsgemäß wird ein Verfahren zur Durchführung einer On-Board-Diagnose eines Abgaskatalysators in einem Abgasnachbehandlungssystem einer Verbrennungskraftmaschine eines Fahrzeugs bereitgestellt. Dabei umfasst das Abgasnachbehandlungssystem den Abgaskatalysator und mindestens einen stromabwärts des Abgaskatalysators angeordneten NOx-Sensor. Zunächst wird nach einem Start der Verbrennungskraftmaschine, bei dem der Abgaskatalysator eine unterhalb seiner Light-Off-Temperatur liegende Temperatur aufweist, ein Beginn einer erstmalig nach dem Start einsetzenden Konvertierung von Stickoxiden durch die Messung der NOx-Konzentration im Abgas mit dem NOx-Sensor ermittelt. Im Anschluss daran wird ein Parameter ermittelt, der den Beginn der erstmalig einsetzenden Konvertierung charakterisiert. Der ermittelte Parameter wird mit einem Erwartungswert dieses Parameters verglichen und anhand dieses Vergleichs wird ein Zustand des Abgaskatalysators in Abhängigkeit von dem Vergleich festgestellt.

Der NOx-Sensor umfasst bevorzugt eine Sensoreinheit und eine Steuereinheit. Die Steuereinheit ist ausgebildet, die Messwerte aufzubereiten, um sie dann an ein Motorsteuergerät weiterzugeben. Der NOx-Sensor wird vom Abgas umströmt, sodass Stickstoff- und Sauerstoffkonzentrationen gemessen werden können. Die erfassten Messsignale werden an die On-Board-Diagnose weitergegeben. Die On-Board-Diagnose überwacht die emissionsrelevanten Elemente des Motors sowie der Abgasnachbehandlung üblicherweise permanent und während des Fahrzeugbetriebs.

Das Verfahren umfasst den Startvorgang der kalten Verbrennungskraftmaschine, wobei bei dem Startvorgang die Temperatur des Abgaskatalysators unterhalb seiner Light-Off-Temperatur liegt. Durch den Betrieb und die damit einhergehende Beaufschlagung des Abgaskatalysators mit heißem Abgas wird dem Abgaskatalysator durch Wärmeübergang Energie zugeführt, sodass sich infolgedessen seine Temperatur erhöht, bis sie schließlich oberhalb der Light-off-Temperatur liegt. Unterstützt wird die Erwärmung durch die einsetzende Katalysatortätigkeit selbst, nämlich durch die exothermen, im Katalysator stattfindenden Konvertierungsreaktionen.

Unter "Light-Off-Temperatur" wird eine Katalysatortemperatur verstanden, bei der 50% der einströmenden Schadstoffe, hier Stickoxide NOx, katalytisch umgewandelt werden. Die konkrete Höhe der Light-Off-Temperatur hängt von der individuellen Katalysatorbeschichtung ab.

Der NOx-Sensor dient in diesem Fall dazu, durch Messung der Stickoxidkonzentration bzw. deren Änderung festzustellen, ob eine Konvertierung der Stickoxide begonnen hat, das heißt NOx in Stickstoff umgewandelt wird. Somit kann ermittelt werden, ob die Light-Off-Temperatur erreicht wurde und eine Konvertierung der Schadstoffemissionen des Abgases erfolgt.

Gemäß bevorzugten Ausführungen erfolgt die Ermittlung des Beginns der erstmalig nach dem Start einsetzenden Konvertierung von Stickoxiden durch den Katalysator, indem die stromab des Katalysators mit dem NOx-Sensor gemessene NOx-Konzentration mit der stromauf des Katalysators vorliegenden NOx-Konzentration, also die in den Katalysator einströmende NOx-Menge, verglichen wird. Letztere kann mit einem weiteren, dem Abgaskatalysator vorgeschalteten NOx-Sensor gemessen werden oder, bevorzugt, in Abhängigkeit des Betriebspunkts der Verbrennungskraftmaschine modelliert werden. Die Modellierung erfolgt üblicherweise mittels eines Kennfelds, das die NOx-Rohemission des Motors in Abhängigkeit von seinem Betriebspunkt (Last, Drehzahl) darstellt.

Ferner lässt sich anhand des ermittelten Parameters, der den Beginn der erstmalig einsetzenden Konvertierung charakterisiert, durch den Vergleich mit einem Erwartungswert dieses Parameters ein Zustand des Abgaskatalysators in Abhängigkeit des Vergleichs feststellen.

Somit lässt sich zunächst grundsätzlich feststellen, ob der Abgaskatalysator funktionsfähig oder defekt ist. Der Nachweis der Konvertierungsfähigkeiten muss erfindungsgemäß nicht mehr indirekt mit Hilfe der Sauerstoffspeicherfähigkeit (OSC) des Abgaskatalysators unter Zuhilfenahme der Lambda-Sonden erfolgen, sondern erfolgt nun direkt und wesentlich genauer. Des Weiteren ist erfindungsgemäß eine weitaus exaktere Feststellung des genauen Startpunkts der einsetzenden Konvertierung möglich. Diese Bewertung erfolgt vorzugsweise mit jedem Startvorgang der Verbrennungskraftmaschine, bei dem die Temperatur des Abgaskatalysators unterhalb seiner Light-Off-Temperatur liegt und in Folge des Betriebs die Light-Off-Temperatur erreicht wird bzw. überschritten wird. Dadurch kann auf die herkömmliche aufwendige Lambdaverstellung verzichtet werden. Darüber hinaus lassen sich Aussagen zu dem Alterungszustand des Abgaskatalysators treffen. Auch bezüglich eines möglichen Vergiftungszustands des Abgaskatalysators können durch das Verfahren Bewertungen vorgenommen werden. Der Abgaskatalysator und dessen Beschichtung sind äußerst aggressiven Bedingungen unterworfen, verursacht durch die im Abgas befindlichen Schadstoffe sowie hohen Temperaturen und Temperaturunterschiede. Zu den wesentlichen Gefahren für Abgaskatalysatoren gehört die thermische Überlastung und Vergiftung. Thermisch, insbesondere durch schnelle thermische Wechselbeanspruchungen, können sowohl der Katalysatorträger als auch die Beschichtung geschädigt werden. Im Fall hoher und schnell wechselnder Abgastemperaturen können die Trägermaterialen ihre Festigkeit verlieren. Zudem können Sintervorgänge im Bereich des Washcoats und der Beschichtung resultieren, sodass die aktive katalytische Oberfläche verringert wird. Zusätzlich zu der thermischen Überlast kann die katalytische Beschichtung auch durch schädliche Substanzen deaktiviert werden. Derartige Substanzen sind Pb, Hg und Cd. Diese gehen eine chemische Verbindung ein und bilden dadurch eine irreversible, inaktive Legierung. Ebenso können SO₂ und P von der katalytischen Schicht adsorbiert werden und weitere Reaktionen blockieren. Diese Mechanismen sind teilweise reversibel und können durch Wärme rückgängig gemacht werden. Durch die Zustandsermittlung durch das erfindungsgemäße Verfahren können so zum einen geeignete Maßnahmen eingeleitet werden, um die katalytische Schicht zu regenerieren. Zum anderen lässt sich feststellen, ob neben reversiblen Schädigungen weitere irreversible Schädigungen auftreten, die ggf. andere Maßnahmen oder sogar einen Austausch des Katalysators notwendig machen.

Geeignete Abgaskatalysatoren, die für die Anordnungen Verwendung finden können bzw. die Gegenstand des Verfahrens sind, sind allgemein alle Komponenten, die eine katalytische Beschichtung aufweisen. Dies können beispielsweise reine Abgaskatalysatoren sein, beispielsweise Dreiwegekatalysatoren, Oxidationskatalysatoren, NOx-Speicherkatalysatoren oder SCR-Katalysatoren. Zudem kommen katalytisch beschichtete Partikelfilter (insbesondere in Erstposition) in Frage, also Partikelfilter, die mit einer der zuvor genannten Katalysatorbeschichtungen ausgestattet sind. Im Falle eines mit einer dreiwegekatalytischen Beschichtung ausgestatteten Partikelfilters spricht man auch von einem Vierwegekatalysator.

In bevorzugter Ausgestaltung der Erfindung ist vorgesehen, dass der den Beginn der erstmalig einsetzenden Konvertierung charakterisierende Parameter eine zwischen dem Startvorgang und der erstmalig einsetzenden Konvertierung verstrichene Zeit oder ein Zeitäquivalent ist. Das Fahrverhalten (und damit die Motordrehzahl, Last u. ä.) hat erheblichen Einfluss auf die Dynamik der Aufheizung des Abgaskatalysators, dementsprechend kann sich dies auf den Beginn der erstmalig einsetzenden Konvertierung und den Erwartungswert des Parameters auswirken. Daher ist zum einen die Verwendung der Zeit als Parameter möglich, die zwischen dem Start der Verbrennungskraftmaschine und dem Beginn der erstmalig einsetzenden Konvertierung gemessen wird. Deren Erwartungswert kann beispielhaft über ein Model in Form eines Kennfelds bestimmt werden, das Informationen zu dem Erwartungswert der Zeit in Abhängigkeit der Betriebsweise bereitstellt. Variablen können dabei die Motordrehzahl und die Last sein, anhand derer ein genau zugeordneter Erwartungswert bestimmbar ist. Besonders bevorzugt ist der Parameter ein Zeitäquivalent, wodurch vorteilhafterweise die Ermittlung eines Erwartungswerts vereinfacht wird, da einem Zeitäquivalent häufig bereits die Information zu Fahrverhalten und ähnlichem immanent ist. Durch die Verwendung einer Zeit oder eines Zeitäquivalents lassen sich neben Aussagen zur generellen Funktionsfähigkeit des Abgaskatalysators auch Bewertungen von Zwischenzuständen vornehmen. In Abhängigkeit der Abweichung von dem gemessenen Wert des Parameters zum Erwartungswert des Parameters kann der aktuelle Zustand und die Effizienz des Abgaskatalysators festgestellt werden. Ein mangelhafter bzw. defekter Abgaskatalysator wird hinsichtlich der Zeit oder des Zeitäquivalents verzögert mit der Konvertierung beginnen bzw. wird diese Konvertierung gänzlich ausbleiben.

In weiterer bevorzugter Ausgestaltung der Erfindung ist vorgesehen, dass das Zeitäquivalent ein integrierter (kumulierter) Abgasmassenstrom, eine integrierte (kumulierte) Menge einer Abgaskomponente (NOx, HC, CO, .....), eine in den Katalysator eingetragene integrierte (kumulierte) Energiemenge, eine durch die Verbrennungskraftmaschine verbrauchte Kraftstoffmenge oder eine zurückgelegte Fahrstrecke ist. Dadurch stehen verschiedene geeignete Möglichkeiten zur Verfügung, das Fahrverhalten bzw. die Betriebsweise des Fahrzeugs zu berücksichtigen, die beeinflusst, wieviel Wärmemenge in den Abgaskatalysator zu dessen Aufheizung eingetragen wird, um eine noch genauere Zustandsfeststellung des Abgaskatalysators zu realisieren. Ein integrierter Massenstrom beispielsweise vereint in sich das Fahrverhalten dahingehend, dass in Abhängigkeit der Motordrehzahl und der Last die Kraftstoffzufuhr variiert. Dadurch kann sich der Startpunkt der erstmalig einsetzenden Konvertierung des Abgaskatalysators bei unterschiedlicher Fahrweise zeitlich voneinander unterscheiden. Durch die Berücksichtigung des über die Zeit zwischen Motorstart und Konvertierungsbeginn integrierten Massenstroms wird das Fahrverhalten jedoch inhärent betrachtet und eine Vergleichbarkeit der Dauern zwischen Motorstart und Startpunkt der Konvertierung gewährleistet. Der integrierte Massenstrom lässt sich einfach und mit hoher Genauigkeit berechnen oder modellieren, insbesondere über den Motorbetriebspunkt (Last, Drehzahl) oder die Zylinderfüllung. Alternativ stehen jedoch auch diverse Möglichkeiten zur Messung des Massenstroms zur Verfügung. Auch eine integrierte Abgaskomponente, eine eingetragene Energiemenge oder eine zurückgelegte Fahrstrecke stellen vorteilhafte Zeitäquivalente dar, die ebenfalls mit bekannten Mitteln zu berechnen oder messen sind.

In einer weiteren vorteilhaften Ausführung des erfindungsgemäßen Verfahrens ist der Parameter die Temperatur des Abgaskatalysators oder des Abgases stromab des Abgaskatalysators bei Beginn der erstmalig einsetzenden Konvertierung von Stickoxiden. Durch die Ermittlung der Temperatur als Parameter und Vergleich mit einem Erwartungswert, lassen sich Aussagen zu Zuständen bzw. Zwischenzuständen des Abgaskatalysators machen. So wirken sich beispielsweise Vergiftungszustände auf die katalytische Beschichtung des Abgaskatalysators aus und beeinflussen diese mit der Folge verzögerter, erst bei höheren Katalysator- bzw. Abgastemperaturen einsetzender Konvertierung. Durch die Betrachtung und den Vergleich der Temperatur als Parameter können diese und andere Zustände erfasst und erkannt werden.

Für eine noch genauere und umfassendere Beurteilung des Zustands des Abgaskatalysators können bevorzugt die Zeit oder ein Zeitäquivalent und die Temperatur des Abgaskatalysators bzw. des Abgases in Kombination miteinander verwendet werden.

Bevorzugt wird die Temperatur des Abgaskatalysators oder des Abgases stromab des Abgaskatalysators über ein Modell errechnet. Da Lambda-Sonden und NOx-Sensorik sowie Kenntnis über die Steuerung der Verbrennungskraftmaschine und deren Luft- und Brennstoffzufuhr zur Verfügung stehen, lässt sich in Verbindung mit weiteren bauteilspezifischen Parametern, wie beispielsweise Wärmeleitfähigkeit, ein sehr genaues Modell über die Temperaturentwicklung in Abhängigkeit des Betriebsverhaltens des Fahrzeugs für den Abgaskatalysator oder das Abgas stromab des Abgaskatalysators erzeugen. Dieses kann dann zur Bestimmung der Temperatur bei Einsetzen der erstmaligen Konvertierung des Abgaskatalysators verwendet werden.

Gemäß einer weiteren bevorzugten Ausgestaltung der Erfindung wird die Temperatur des Abgaskatalysators oder des Abgases stromab des Abgaskatalysators durch einen Temperatursensor gemessen. Dies kann auch durch die Ermittlung des Heizwiderstands des NOx-Sensors erfolgen. Dadurch lässt sich eine sehr genaue Temperaturbestimmung durchführen.

Bevorzugt wird der Erwartungswert des Parameters in Abhängigkeit eines Betriebspunkts der Verbrennungskraftmaschine ermittelt. Wie bereits erwähnt, beeinflusst das tatsächliche Fahrverhalten und damit die Betriebsweise den zu messenden Parameter und auch dessen Erwartungswert. Daher ist für eine qualitativ und quantitativ hochwertige Aussage über den Zustand des Abgaskatalysators die Berücksichtigung des Betriebspunktes der Verbrennungskraftmaschine vorteilhaft. Dies kann beispielhaft durch Verwendung eines Kennfelds erfolgen. Das Kennfeld kann dabei den Erwartungswert in Abhängigkeit der Motordrehzahl und der Last der Verbrennungskraftmaschine darstellen. Alternative Kennfelder können ebenfalls Anwendung finden. Das Kennfeld kann zwei- oder mehrdimensional sein und schließt somit auch Kennlinien ein.

Als Ergebnis der Auswertung des Vergleichs des ermittelten Parameters mit dem Erwartungswert dieses Parameters wird der Zustand des Katalysators festgestellt. Der Katalysatorzustand wird vorzugsweise durch einen Bordcomputer und/oder ein Steuergerät des Fahrzeugs festgestellt. Wenn eine Differenz zwischen dem ermittelten Parameter und dem Erwartungswert oberhalb einer vorbestimmten Schwelle liegt, wird ein geschädigter oder stark gealterter Katalysator festgestellt und durch einen Bordcomputer und/oder ein Steuergerät des Fahrzeugs ein Fehlersignal erzeugt. So können unterschiedliche Warnstufen umgesetzt und auch eine gewisse Fehlertoleranz kalkuliert werden.

Eine weitere bevorzugte Ausgestaltung der Erfindung betrifft ein Fahrzeug, das ein hybrides Fahrzeug ist. Das Verfahren wird dann nach einem Wechsel von einem elektromotorischen Betrieb zu einem verbrennungsmotorischen Betrieb nach dem Wiederstart der Verbrennungskraftmaschine durchgeführt. In hybriden Fahrzeugen, die neben dem Verbrennungsmotor einen Elektromotor als Traktionsmotor umfassen und sich durch verringerte Schadstoffemissionen auszeichnen, ist es besonders vorteilhaft für den wechselnden elektromotorischen und verbrennungsmotorischen Betrieb, den Zustand des Abgaskatalysators zu überwachen. Nach Strecken, die elektromotorisch realisiert wurden, während die Verbrennungskraftmaschine nicht betrieben wurde, kann es zu einer Auskühlung des Katalysators unter seine Light-off-Temperatur kommen. Nach dem (Wieder)start der Verbrennungskraftmaschine eignet sich das erfindungsgemäße Verfahren für die Erfassung der erstmalig einsetzenden Konvertierung und des daraus bestimmten Katalysatorzustands.

Mit Vorteil wird ein festgestellter Zustand des Abgaskatalysators für eine Steuerung und/oder Regelung von Abgaskatalysator-Maßnahmen verwendet. Durch die Feststellung des Zustands durch das erfindungsgemäße Verfahren kann ermittelt werden, ob und welche Abgaskatalysator-Maßnahmen auszuführen sind. Dabei können unter anderem motorseitige Katalysatorheizmaßnahmen wie Spätzündung, erhöhte Motordrehzahl, Nockenwellenverstellung oder Lambdaverstellung durchgeführt werden. Darüber hinaus gibt es außermotorische Katalysatorheizmaßnahmen, wozu die elektrische Beheizung eines elektrisch heizbaren Katalysators (so genannter E-Kat) oder Sekundärluftzufuhr gezählt werden. Ein erheblicher Anteil der gesamten Schadstoffemissionen entstammt aus der Phase, in der das Abgasnachbehandlungssystem noch nicht aktiv ist, nämlich der Phase nach dem Start der Verbrennungskraftmaschine. Durch Nutzung des festgestellten Zustands können die erwähnten Maßnahmen idealerweise im Vorfeld geplant und optimiert durchgeführt werden, sodass die Anspringzeit und die dabei emittierten Schadstoffe reduziert werden können. Dabei erlaubt die Kenntnis des Katalysatorzustands auch die bedarfsgerechte Anpassung dieser Maßnahmen. Sofern beispielsweise ein vorgeschädigter oder leicht gealterter Katalysator festgestellt wurde, dessen Light-off-Temperatur gegenüber einem neuen Katalysator zu höheren Temperaturen verschoben ist, so kann die Intensität und/oder die Dauer einer Heizmaßnahme erhöht werden.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Systemaufbau eines erfindungsgemäßen Abgasnachbehandlungssystems;
- Figur 2: einen Ablaufplan eines Verfahrens zur Durchführung einer On-Board-Diagnose eines Abgaskatalysators gemäß einer Ausgestaltung der Erfindung

Die Erfindung wird nachfolgend gemäß einer Ausführung der vorliegenden Erfindung am Beispiel seiner Anwendung in einem Fahrzeug ausgeführt. Das Verfahren ist jedoch keineswegs auf diese Anwendungsfälle beschränkt.

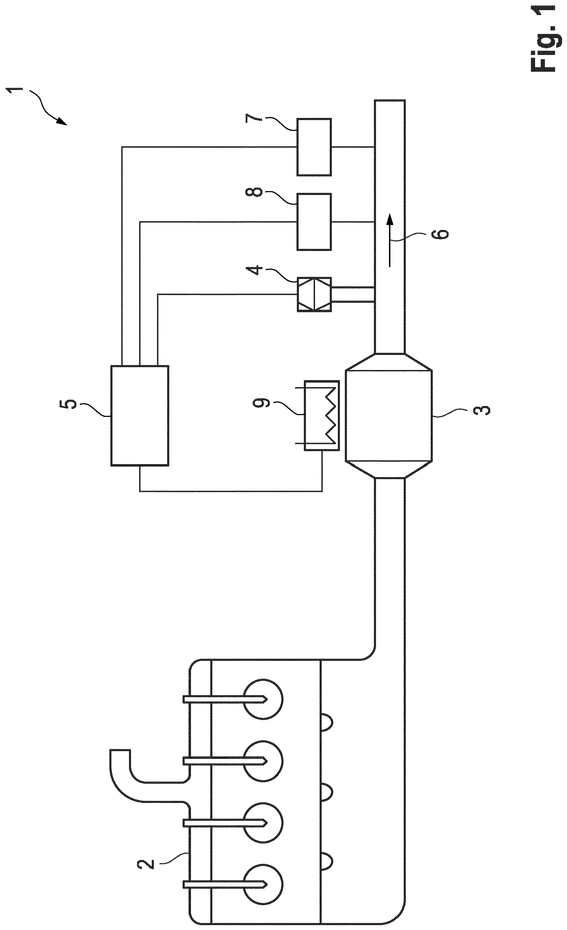

In Figur 1 ist ein Abgasnachbehandlungssystem 1 gemäß einer Ausführung der Erfindung gezeigt, das einer Verbrennungskraftmaschine 2 eines ansonsten nicht weiter dargestellten Fahrzeugs nachgeordnet ist. Stromabwärts der Verbrennungskraftmaschine 2 ist ein Abgaskatalysator, der in diesem Beispiel als Dreiwegekatalysator 3 ausgestaltet ist, angeordnet.

Diesem nachgeordnet ist ein NOx-Sensor 4, der in die Abgasleitung ragt, wodurch der NOx-Sensor 4 durch das Abgas 6 (dargestellt durch einen Pfeil) umströmt wird und die NOx-Konzentration bzw. deren Änderung misst. Ebenfalls stromab des Dreiwegekatalysators 3, ist ein Durchflussmessgerät 8 angeordnet, das ausgebildet ist, den Abgasmassenstrom 6 zu messen.

Darüber hinaus umfasst das Abgasnachbehandlungssystem 1 einen Temperatursensor 7. Dieser befindet sich stromabwärts des Dreiwegekatalysators 3 und misst die Temperatur des aus dem Dreiwegekatalysator 3 austretenden Abgases. Eine weitere Möglichkeit zur Messung der Abgastemperatur besteht in der Nutzung des NOx-Sensors 4 durch Ermittlung von dessen Heizwiderstand. Alternativ kann der Temperatursensor 7 auch direkt an oder in dem Dreiwegekatalysator 3 angeordnet sein, um die Katalysatortemperatur zu messen.

Weiterhin umfasst das Fahrzeug einen Bordcomputer 5. Er dient unter anderem zur Aufbereitung und Auswertung der Signale, die unter anderem von dem NOx-Sensor 4, dem Durchflussmessgerät 8 und dem Temperatursensor 7 stammen.

Weiterhin umfasst das Abgasnachbehandlungssystem 1 des gezeigten Ausführungsbeispiels eine elektrische Katalysatorheizung 9, die unmittelbar an dem Dreiwegekatalysator 3 angeordnet ist und ausgebildet ist, den Dreiwegekatalysator 3 aufzuheizen.

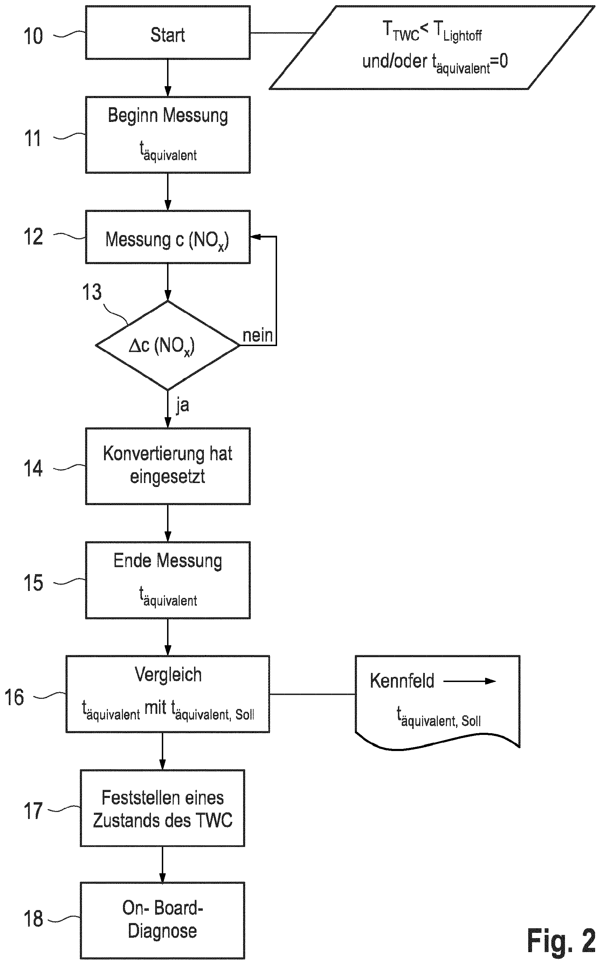

Nachfolgend wird anhand von Figur 2 das erfindungsgemäße Verfahren am Beispiel des Fahrzeugs gemäß Figur 1 erläutert.

Das Verfahren startet in Block 10, wo die Verbrennungskraftmaschine 2 gestartet wird. Vor und zum Zeitpunkt des Starts der Verbrennungskraftmaschine 2 weist der Dreiwegekatalysator 3 eine unterhalb seiner Light-Off-Temperatur liegende Temperatur auf. Diese Temperatur wird durch den Temperatursensor 7 erfasst. Alternativ wird die Katalysatortemperatur modelliert. Nach einem längeren Motorstillstand kann hier beispielsweise angenommen werden, dass die Katalysatortemperatur der Umgebungstemperatur entspricht.

Gemäß dieser Ausführung dient neben der Temperatur als Parameter insbesondere auch ein Zeitäquivalent als zu messender Parameter. In diesem Fall handelt es sich bei dem Zeitäquivalent um einen integrierten Abgasmassenstrom. Entsprechend erfolgt unmittelbar nach dem Start der Verbrennungskraftmaschine 2 in Block 11 die Messung dieses Zeitäquivalents, mit anderen Wort die Messung des Abgasmassenstroms mit Hilfe des Durchflussmessgeräts 8 und dessen Integrierung mit der fortschreitenden Zeit. Alternativ wird der aktuelle Abgasmassenstrom kennfeldmäßig in Abhängigkeit des Betriebspunkts der Verbrennungskraftmaschine 2 modelliert und integriert.

In Block 12 erfolgt die Messung der Stickoxide im Abgas 6 und deren Veränderung mit Hilfe des NOx-Sensors 4. Gleichzeitig wird die in den Katalysator 3 einströmende NOx-Konzentration, also die NOx-Rohemission der Verbrennungskraftmaschine 2, ermittelt. Diese erfolgt bevorzugt durch kennfeld-gestützte Modellierung der NOx-Rohemission in Abhängigkeit vom Betriebspunkt der Verbrennungskraftmaschine 2.

In Block 13 wird durch den Bordcomputer 5 überprüft, ob die von dem NOx-Sensor 4 erfasste NOx-Konzentration von der in den Katalysator 3 einströmenden NOx-Konzentration abweicht. Liegt keine Abweichung vor, hat die Konvertierung durch den Katalysator 3 noch nicht eingesetzt und das Verfahren geht zurück zu Block 12, wo erneut die NOx-Konzentration stromab des Katalysators 3 gemessen wird und die aktuelle NOx-Rohemission der Verbrennungskraftmaschine 2 ermittelt wird, um dann die Abfrage in Block 13 zu wiederholen.

Wird hingegen eine Abweichung der von dem NOx-Sensor 4 erfassten NOx-Konzentration von der in den Katalysator 3 einströmenden NOx-Konzentration erkannt, beginnt im Dreiwegekatalysator 3 die Konvertierung der im Abgas 6 befindlichen Schadstoffe, insbesondere der Stickoxide. In diesem Fall erfolgt in Block 14 die Feststellung dieser erstmalig nach Start der Verbrennungskraftmaschine 2 einsetzenden Konvertierung.

Der Bordcomputer 5 stellt anhand des Signals von dem Temperatursensor 7 die aktuell im Abgas 6 und damit im Dreiwegekatalysator 3 vorliegende Temperatur fest. Ebenfalls beendet er die integrierende Durchflussmessung des Abgasmassenstroms 6 (Block 15). Somit liegt durch den integrierten Abgasmassenstrom 6 ein geeignetes Zeitäquivalent vor, mit dem sich der Beginn der erstmalig einsetzenden Konvertierung charakterisieren und vergleichen lässt.

Anhand eines Kennfelds ermittelt der Bordcomputer 5 einen Erwartungswert des charakterisierenden Parameters für einen neuwertigen, ungeschädigten Abgaskatalysator. Durch die Fahrweise bzw. Betriebsweise, die seit Start der Verbrennungskraftmaschine 2 und Beginn der erstmalig einsetzenden Konvertierung stattgefunden hat, kann anhand des Kennfelds ein Erwartungswert ermittelt werden, der für diese spezielle Situation für den neuwertigen Abgaskatalysator zu erwarten wäre. In Block 16 vergleicht der Bordcomputer 5 dann den durch Messung für den Dreiwegekatalysator 3 ermittelten Parameter mit dem aus dem Kennfeld ermittelten Erwartungswert dieses Parameters. Da im vorliegenden Beispiel der integrierte Abgasmassenstrom als Zeitäquivalent verwendet wird (beispielsweise in der Dimension einer Masse), handelt es sich bei dem Erwartungswert ebenfalls um einen integrierten Abgasmassenstrom, der für einen neuwertigen Dreiwegekatalysator zwischen Motorstart und Konvertierungsbeginn zu erwarten wäre. Ergänzend kann die gemessene Temperatur, die der Dreiwegekatalysator 3 während der erstmalig einsetzenden Konvertierung aufwies, mit in den Vergleich einfließen. Auch der Erwartungswert für die Temperatur des Dreiwegekatalysators 3, ab der die Konvertierung theoretisch bei neuwertigem Dreiwegekatalysator 3 zu erwarten wäre, kann dabei aus einem Kennfeld ermittelt werden.

In Block 17 erfolgt das Feststellen eines Zustands des Katalysators 3 in Abhängigkeit von dem Vergleich. Dies erfolgt über die Beurteilung der Abweichungen zwischen dem/den gemessenen Parameter/n und seinem/ihren Erwartungswert/en. Es können Schwellen definiert werden, die gewisse Toleranzen und Schwankungen berücksichtigen. Durch Kombination beider Parameter (Zeitäquivalent und Temperatur) lässt sich der Zustand des Dreiwegekatalysators 3 besonders genau beurteilen. Das kann unter Verwendung eines gemittelten Wertes aus dem Parameter Temperatur und dem Parameter Zeitäquivalent erfolgen, wobei die Mittelung durch unterschiedliche Gewichtung der beiden Parameter umgesetzt werden kann.

Um den Dreiwegekatalysator 3 effizient zu betreiben und die Schadstoffemissionen so gering wie möglich zu halten, kann der ermittelte Katalysatorzustand ferner dazu dienen, Abgaskatalysator-Maßnahmen auszuführen und zu regeln. Beispielhaft kommt gemäß der erfindungsgemäßen Ausführung ein E-Kat zur Anwendung. Der Bordcomputer 5 steuert dafür die Katalysatorheizung 9. Durch Nutzung des festgestellten Zustands kann die Katalysatorheizung 9 idealerweise im Vorfeld geplant und optimiert durchgeführt werden, sodass die Anspringzeit und die dabei emittierten Schadstoffe reduziert werden können, falls beispielsweise eine sinkende Effizienz festgestellt wurde, die jedoch durch die Katalysatorheizung kompensiert werden kann.

### Bezugszeichenliste

- 1: Abgasnachbehandlungssystem
- 2: Verbrennungskraftmaschine
- 3: Dreiwegekatalysator
- 4: NOx-Sensor
- 5: Bordcomputer
- 6: Abgas / Abgasmassenstrom
- 7: Temperatursensor
- 8: Durchflussmessgerät
- 9: Katalysatorheizung

## Patentansprüche

1. Verfahren zur Durchführung einer On-Board-Diagnose eines Abgaskatalysators (3) in einem Abgasnachbehandlungssystem (1) einer Verbrennungskraftmaschine (2) eines Fahrzeugs, wobei das Abgasnachbehandlungssystem (1) den Abgaskatalysator (3) und mindestens einen stromabwärts des Abgaskatalysators (3) angeordneten NOx-Sensor (4) umfasst, umfassend folgende Schritte:
nach einem Start der Verbrennungskraftmaschine (2), bei dem der Abgaskatalysator (3) eine unterhalb seiner Light-Off-Temperatur liegende Temperatur aufweist, Ermitteln eines Beginns einer erstmalig nach dem Start einsetzenden Konvertierung von Stickoxiden durch die Messung der NOx-Konzentration im Abgas (6) mit dem NOx-Sensor (4),
Ermitteln eines den Beginn der erstmalig einsetzenden Konvertierung charakterisierenden Parameters,
Vergleichen des ermittelten Parameters mit einem Erwartungswert dieses Parameters, und
Feststellen eines Zustands des Abgaskatalysators (3) in Abhängigkeit von dem Vergleich.

2. Verfahren nach Anspruch 1, wobei der Parameter eine zwischen dem Startvorgang und der erstmalig einsetzenden Konvertierung verstrichene Zeit oder ein Zeitäquivalent ist.

3. Verfahren nach Anspruch 2, wobei das Zeitäquivalent ein integrierter Abgasmassenstrom, eine integrierte Menge einer Abgaskomponente, eine eingetragene Energiemenge, eine verbrauchte Kraftstoffmenge oder eine zurückgelegte Fahrstrecke ist.

4. Verfahren nach einem der vorhergehenden Ansprüche, wobei der Parameter die Temperatur des Abgaskatalysators (3) oder die Temperatur des Abgases (6) stromab des Abgaskatalysators (3) bei Beginn der erstmalig einsetzenden Konvertierung von Stickoxiden ist.

5. Verfahren nach Anspruch 4, wobei die Temperatur des Abgaskatalysators (3) oder des Abgases (6) stromab des Abgaskatalysators (3) über ein Modell errechnet oder durch einen Temperatursensor (7) gemessen wird.

6. Verfahren nach einem der vorhergehenden Ansprüche, wobei der Erwartungswert aus einem Kennfeld in Abhängigkeit eines Betriebspunkts der Verbrennungskraftmaschine (2) ermittelt wird.

7. Verfahren nach einem der vorhergehenden Ansprüche, wobei in einem Bordcomputer (5) und/oder Steuergerät ein Fehlersignal erzeugt wird, wenn eine Differenz zwischen dem ermittelten Parameter und dem Erwartungswert oberhalb einer vorbestimmten Schwelle liegt.

8. Verfahren nach einem der vorhergehenden Ansprüche, wobei das Fahrzeug ein hybrides Fahrzeug ist und wobei das Verfahren nach einem Wechsel von einem elektromotorischen Betrieb zu einem verbrennungsmotorischen Betrieb nach dem Start der Verbrennungskraftmaschine (2) durchgeführt wird.

9. Verfahren nach einem der vorhergehenden Ansprüche, wobei ein festgestellter Zustand des Abgaskatalysators (3) für eine Steuerung und/oder Regelung von Abgaskatalysator-Maßnahmen verwendet wird.

10. Fahrzeug mit einer Verbrennungskraftmaschine (2) und einem Abgasnachbehandlungssystem (1), wobei das Abgasnachbehandlungssystem (1) den Abgaskatalysator (3) und mindestens einen stromabwärts des Abgaskatalysators (3) angeordneten NOx-Sensor (4) umfasst, **dadurch gekennzeichnet, dass** das Fahrzeug eingerichtet ist, ein Verfahren zur Durchführung einer On-Board-Diagnose des Abgaskatalysators (3) nach einem der Ansprüche 1 bis 9 auszuführen.

## Claims

1. Method for carrying out an on-board diagnosis of an exhaust gas catalytic converter (3) in an exhaust gas aftertreatment system (1) of an internal combustion engine (2) of a vehicle, wherein the exhaust gas aftertreatment system (1) comprises the exhaust gas catalytic converter (3) and at least one NOx Sensor (4) which is arranged downstream of the exhaust gas catalytic converter (3), the method comprising the following steps:
after starting the internal combustion engine (2), in which the exhaust gas catalytic converter (3) has a temperature below its light-off temperature, determining the beginning of a conversion of nitrogen oxides, which is initiated for the first time after the start, by measuring the NOx concentration in the exhaust gas (6) using the NOx sensor (4),
determining a parameter which characterizes the beginning of the conversion which is initiated for the first time,
comparing the determined parameter with an expected value of this parameter, and
identifying a state of the exhaust gas catalytic converter (3) on the basis of the comparison.

2. Method according to claim 1, wherein the parameter is a time which has elapsed between the starting process and the conversion which is initiated for the first time, or a time equivalent.

3. Method according to claim 2, wherein the time equivalent is an integrated exhaust gas mass flow, an integrated amount of an exhaust gas component, an input amount of energy, a consumed amount of fuel, or a route traveled.

4. Method according to any of the preceding claims, wherein the parameter is the temperature of the exhaust gas catalytic converter (3) or the temperature of the exhaust gas (6) downstream of the exhaust gas catalytic converter (3) at the beginning of the conversion of nitrogen oxides which is initiated for the first time.

5. Method according to claim 4, wherein the temperature of the exhaust gas catalytic converter (3) or of the exhaust gas (6) downstream of the exhaust gas catalytic converter (3) is calculated via a model or is measured by a temperature sensor (7).

6. Method according to any of the preceding claims, wherein the expected value is determined from a characteristic diagram on the basis of an operating point of the internal combustion engine (2).

7. Method according to any of the preceding claims, wherein an error signal is generated in an on-board computer (5) and/or control device when a difference between the determined parameter and the expected value is above a predetermined threshold.

8. Method according to any of the preceding claims, wherein the vehicle is a hybrid vehicle, and wherein the method is carried out after changing from an electric motor operation to an internal combustion engine operation after the internal combustion engine (2) is started.

9. Method according to any of the preceding claims, wherein an identified state of the exhaust gas catalytic converter (3) is used for open-loop and/or closed-loop control of exhaust gas catalytic converter measures.

10. Vehicle having an internal combustion engine (2) and an exhaust gas aftertreatment system (1), the exhaust gas aftertreatment system (1) comprising the exhaust gas catalytic converter (3) and at least one NOx sensor (4) which is arranged downstream of the exhaust gas catalytic converter (3),
**characterized in that** the vehicle is designed to perform a method for carrying out an on-board diagnosis of the exhaust gas catalytic converter (3) according to any of claims 1 to 9.

## Revendications

1. Procédé permettant de réaliser un diagnostic embarqué d'un catalyseur pour gaz d'échappement (3) dans un système de post-traitement des gaz d'échappement (1) d'un moteur à combustion interne (2) d'un véhicule, dans lequel le système de post-traitement des gaz d'échappement (1) comprend le catalyseur pour gaz d'échappement (3) et au moins un capteur NOx (4) disposé en aval du catalyseur pour gaz d'échappement (3), comprenant les étapes suivantes :
après un démarrage du moteur à combustion interne (2), lors duquel le catalyseur pour gaz d'échappement (3) présente une température inférieure à sa température d'amorçage, détermination d'un début d'une conversion d'oxydes d'azote commençant pour la première fois après le démarrage par la mesure de la concentration en NOx dans les gaz d'échappement (6) avec le capteur NOx (4),
détermination d'un paramètre caractérisant le début de la conversion commençant pour la première fois,
comparaison du paramètre déterminé avec une valeur attendue dudit paramètre, et
constatation d'un état du catalyseur pour gaz d'échappement (3) en fonction de la comparaison.

2. Procédé selon la revendication 1, dans lequel le paramètre est un temps écoulé entre le processus de démarrage et la conversion commençant pour la première fois, ou un équivalent de temps.

3. Procédé selon la revendication 2, dans lequel l'équivalent de temps est un débit massique de gaz d'échappement intégré, une quantité intégrée d'un composant de gaz d'échappement, une quantité d'énergie enregistrée, une quantité de carburant consommée ou une distance parcourue.

4. Procédé selon l'une des revendications précédentes, dans lequel le paramètre est la température du catalyseur pour gaz d'échappement (3) ou la température des gaz d'échappement (6) en aval du catalyseur pour gaz d'échappement (3) au début de la conversion d'oxydes d'azote commençant pour la première fois.

5. Procédé selon la revendication 4, dans lequel la température du catalyseur pour gaz d'échappement (3) ou des gaz d'échappement (6) en aval du catalyseur pour gaz d'échappement (3) est calculée par l'intermédiaire d'un modèle ou mesurée par un capteur de température (7).

6. Procédé selon l'une des revendications précédentes, dans lequel la valeur attendue est déterminée à partir d'un diagramme caractéristique en fonction d'un point de fonctionnement du moteur à combustion interne (2).

7. Procédé selon l'une des revendications précédentes, dans lequel un signal d'erreur est généré dans un ordinateur de bord (5) et/ou un appareil de commande lorsqu'une différence entre le paramètre déterminé et la valeur attendue est supérieure à un seuil prédéterminé.

8. Procédé selon l'une des revendications précédentes, dans lequel le véhicule est un véhicule hybride et dans lequel le procédé est réalisé après un passage d'un fonctionnement en moteur électrique à un fonctionnement en moteur à combustion interne après le démarrage du moteur à combustion interne (2).

9. Procédé selon l'une des revendications précédentes, dans lequel un état constaté du catalyseur pour gaz d'échappement (3) est utilisé pour une commande et/ou une régulation des actions du catalyseur pour gaz d'échappement.

10. Véhicule comportant un moteur à combustion interne (2) et un système de post-traitement des gaz d'échappement (1), dans lequel le système de post-traitement des gaz d'échappement (1) comprend le catalyseur pour gaz d'échappement (3) et au moins un capteur NOx (4) disposé en aval du catalyseur pour gaz d'échappement (3), **caractérisé en ce que** le véhicule est configuré pour mettre en oeuvre un procédé permettant de réaliser un diagnostic embarqué du catalyseur pour gaz d'échappement (3) selon l'une des revendications 1 à 9.
